# EUROPEAN PATENT SPECIFICATION

(11) **EP 4 352 472 B1**
(45) Date of publication and mention of the grant of the patent: **21.05.2025**
(21) Application number: 22732499.3
(22) Date of filing: 07.06.2022
(51) Int. Cl.: G01J 3/10, G01J 3/02, G01J 3/433, G01J 3/42

(54) **STABILIZED AND MODULATED 2-CHANNEL BROAD-BAND LIGHT SOURCE**
STABILISIERTE UND MODULIERTE 2-KANAL-BREITBAND-LICHTQUELLE
SOURCE LUMINEUSE À LARGE BANDE STABILISÉE ET MODULÉE À 2 CANAUX

(30) Priority: 08.06.2021 EP 21178217
(43) Date of publication of application: 17.04.2024
(73) Proprietor: trinamiX GmbH, 67063 Ludwigshafen am Rhein (DE)
(72) Inventor: SCHMIDT, Felix, 67063 Ludwigshafen am Rhein (DE); MUELLER, Felix Berno, 67063 Ludwigshafen am Rhein (DE); KAESTEL, David, 67063 Ludwigshafen am Rhein (DE); CALABEK, Martin, 67063 Ludwigshafen am Rhein (DE); ACKU, Uemit, 67063 Ludwigshafen am Rhein (DE); OEGUEN, Celal Mohan, 67063 Ludwigshafen am Rhein (DE)
(74) Representative: BASF IP Association
(86) International application number: PCT/EP2022/065311
(87) International publication number: WO 2022/258562

(56) References cited:
- WO-A1-2011/072870
- WO-A1-2017/040431
- WO-A2-2005/050148
- US-A- 3 277 773
- US-A1- 2009 316 149

## Description

### Technical Field

The invention generally relates to a spectroscopic light source, a spectroscopic measurement system and a method of operating the spectroscopic measurement system. As an example, the devices and methods of the present invention may be employed in the field of spectroscopy. This may specifically include spectrometers working in the visible optical spectrum or in the infrared spectrum, more specifically in the near infrared spectrum or in the middle infrared spectrum. It may further include Fourier Transform Infrared (FTIR) devices or gas spectroscopy. Moreover, the devices and methods of the present invention may also be employed for interferometric applications such as white light interferometry. Thus, the devices and methods of the present invention may specifically be used for lab measurements. Nevertheless, they may also be used in industrial environments including at-line measurements and in-line measurements. The devices and methods of the present invention may even be used in consumer environments, e.g. for air quality measurements. However, other applications are also possible.

### Background art

A large number of spectroscopic light sources for spectroscopic measurements are known from the prior art. Such spectroscopic measurements in many cases require two or more separate light beams, e.g. one measurement light beam and one reference light beam. Thus, additional optical elements, specifically beam splitters, are typically applied in order generate these two or more light beams in the spectroscopic light source. A rather time-consuming alternative is to conduct at least two consecutive measurements, wherein one of the measurements serves as a reference. Many spectroscopic measurements further require that the two or more light beams have different optical properties, e.g. a different modulation. This may specifically relate to periodic modulations with different modulation frequencies, which may e.g. be realized by using chopper wheels or tuning forks. All this increases the constructional complexity and thus the susceptibility of the spectroscopic measurement system to errors. Specifically, imperfections in the optical elements, dust, scratches and the like result in an inevitable scattering of light. Such stray light again affects the accuracy of the spectroscopic measurement. Another disadvantage of consecutive measurement results from short-time fluctuations in the optical path, the light source, or the light bulb. These fluctuations typically may yield a systematic difference between the reference and the sample measurement. Thereby, the noise adds up.

EP 0 729 017 A1 discloses a method of measuring and compensating the effects of stray light in a spectrometer and use of the method to improve linearity and accuracy in the spectrometer. Light from a broadband light source is blocked in a particular band of wavelengths by an optical filter and light outside the particular band of wavelengths is transmitted by the filter. A spectral measurement within the particular band measures aggregate offset, including the effects of stray light, dark current and electronic offset. In absorption spectrometry, a first spectral measurement within the particular band is measured with a chemical sample not present and a second measurement is made with a chemical sample present. The first spectral measurement is used for compensation of a reference spectrum and the second spectral measurement is used for compensation of a sample spectrum, each within the particular band. Further compensation is made for insertion loss of a filter and stray light having wavelengths within the band of wavelengths of the particular band. However, the method disclosed in EP 0 729 017 A1 requires additional process steps, wherein the process steps are performed consecutively. Thus, the method disclosed in EP 0 729 017 A1 requires additional time before the actual spectroscopic measurement can be started.

Moreover, common spectroscopic light sources require long heat-up times. This means that the spectroscopic light source emits light in an instable fashion for a longer period of time after being switched on. This status, however, is not suited for reliable and precise spectroscopic measurements. Thus, each time before conducting a spectroscopic measurement, one would have to wait for the heat-up time to pass by until the spectroscopic light source works stable. Due to this, spectroscopic light sources are in many cases not switched off, but rather left on longer than actually required. This again results in a shortened lifetime of the spectroscopic light sources.

JP H05144576 A discloses a device for increasing the brightness of an incandescent lamp gradually when a switch is put on. Terminals to which a series circuit of an AC power supply AC and an incandescent lamp L is connected are provided. A soft start circuit is provided inside the terminals. When a switch SW1 is put on, a transistor Q4 is put off, charge of a capacitor C6 starts to be discharged, and a potential of a point (c) starts falling. A collector current of a transistor Q3 is therefore decreased, and an impedance of a point (d) is increased. With Ve>Vf+ VQ1BE, a transistor Q1 is put on, and a triac Q5 is put on to light the incandescent lamp L. Above action is repeated for every half cycle till the charge of the capacitor C6 is completely discharged. However, because the impedance of the point (d) is increased gradually, a phase at which the triac Q5 is put on becomes faster accordingly. When the charges of the capacitor C6 is completely discharged, the impedance of the point (d) becomes constant, and a trigger phase of the triac Q5 becomes constant.

JP 3300173 B2 discloses an over-load detecting apparatus and an incandescence lamp control apparatus which can detect an overcurrent by cancelling variation of an input power supply voltage through detection of over-current through a DC circuit. A momentary value of a commercial power supply voltage is detected with a momentary value detecting circuit and a load current is converted into a voltage by a current transformer and is then guided to an overcurrent detector. The over-current detector detects an over-current depending on that an output voltage of the current transformer is equal to or higher than the threshold value or not when the momentary value has reached the predetermined voltage and outputs the result to a phase control circuit. In the phase control circuit, a gate control signal is outputted to a triac so that an incandescent lamp is controlled to light with a half-wave when the over-current is detected.

WO 2005/050148 A2 discloses systems and methods for providing spectral measurements. In one embodiment, a spectral measuring device comprises at least one radiation source configured to provide N (N >= 2) linearly independent illuminant sources characterized by M (M >= N) wavelength channels in a predetermined wavelength range; a sensor unit including at least one sensor, configured to be in optical communication with the radiation sources and an object; a memory storing an illuminant characterization matrix including spectral characteristics of the N illuminant sources in the M wavelength channels; and a processor configured to provide spectral responses of the object in the M wavelength channels, based at least in part on the illuminant characterization matrix. The embodiments of the described document can be used to construct a new class of compact spectral measuring devices, such as handheld color measuring devices.

US 3 277 773 A discloses a radiation measuring apparatus and more particularly an apparatus for measuring radiant energy reflected from a sample.

WO 2017/040431 A1 discloses systems and methods for measuring a concentration and type of substance in a sample at a sampling interface. The systems include a light source, one or more optics, one or more modulators, a reference, a detector, and a controller. The systems and methods disclosed in the described document can be capable of accounting for drift originating from the light source, one or more optics, and the detector by sharing one or more components between different measurement light paths. Additionally, the systems can be capable of differentiating between different types of drift and eliminating erroneous measurements due to stray light with the placement of one or more modulators between the light source and the sample or reference. Furthermore, the systems can be capable of detecting the substance along various locations and depths within the sample by mapping a detector pixel and micro optics to the location and depth in the sample.

WO 2011/072870 A1 discloses a ring light, in particular for optical spectrometers. With conventional ring lamps, it is possible to use the illumination light as a reference for measurement with great expense and even with limited accuracy. The described application is intended to enable the acquisition of reference radiation with less effort. For this purpose, in the at least one entrance bundle of the ring lamp there are additionally arranged entrance ends of a plurality of reference light waveguides, the exit ends of which are combined apart from the ring to form at least one reference bundle.

US 2009/316149 A1 discloses, in one embodiment, a spectrophotometer with a modular 45/0 head. One embodiment of an apparatus for measuring a reflectance of a sample includes a plurality of light emitting diodes for emitting light, a reflective housing positioned above the plurality of light emitting diodes, where the reflective housing is a dome having a plurality of apertures formed around its perimeter, a sample channel for capturing a first portion of the light, where the first portion of the light interacts with the sample, and a reference channel for capturing a second portion of the light, where the second portion of the light is independent of the sample.

Despite the advantages achieved by the known spectroscopic light sources, various technical challenges still remain. Thus, for providing two or more light beams additional optical elements are typically required. This increases the constructional complexity and the susceptibility of the spectroscopic measurement system to errors. Alternatively, at least two consecutive measurements can be conducted. This approach, however, requires more time and may be prone to short-time fluctuations within the spectroscopic measurement system.

### Problem to be solved

It is therefore desirable to provide a spectroscopic light source, a spectroscopic measurement system and a method of operating the spectroscopic measurement system which are suited for spectroscopic measurements and which, at least partially, address the above-mentioned challenges of known devices and methods of similar kind. Specifically, it is desirable to provide devices and methods which are suited for generating two or more separate and potentially different light beams for spectroscopic measurements while, specifically, avoiding the issue of a significant increase in either measurement time or in constructional complexity of the spectroscopic light source which also relates to an increase in a susceptibility to errors of the spectroscopic measurement as well as to the addition of noise. The light beams are further specifically desired to exhibit a high short-term and/or long-term stability, wherein the spectroscopic light source is desired to be switchable without affecting the stability of the light beams.

### Summary

This problem is addressed by a spectroscopic light source, a spectroscopic measurement system and a method of operating the spectroscopic measurement system with the features of the independent claims. Advantageous embodiments are listed in the dependent claims.

Generally, as used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, nonwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the invention, a spectroscopic light source is proposed. The term "spectroscopy" as used herein is a broad term and is to be given its ordinary and customary meaning to a person of ordinary skill in the art and is not to be limited to a special or customized meaning. The term specifically may refer, without limitation, to a process of studying or analyzing an interaction between matter and electromagnetic radiation as a function of the wavelength or frequency of the radiation. The adjective "spectroscopic", thus, may refer to the purpose of being usable for spectroscopy. Thus, the term "spectroscopic", specifically, may be a synonym of the term "for use in spectroscopic applications" and/or of the term "usable in spectroscopic applications". Specifically, spectroscopy may refer to the study of color as generalized from visible light to all bands of the electromagnetic spectrum. Spectroscopy specifically may be a process involving a partitioning of light according to at least one optical property of the light such as a wavelength, a frequency, a wavenumber or an energy. Thus, as an example, a spectroscopic measurement may refer to an optical measurement, wherein a measured variable, e.g. an absorption of light by a measurement object, is measured in dependence of a partitioned optical property of the light, e.g. in dependence of a wavelength of the light.

The term "light" as used herein is a broad term and is to be given its ordinary and customary meaning to a person of ordinary skill in the art and is not to be limited to a special or customized meaning. The term specifically may refer, without limitation, to electromagnetic radiation in the wavelength range of 10 nm to 1 mm. Specifically, the spectroscopic light source may be configured for emitting light of at least one wavelength or in at least one spectral range in the visible and/or infrared spectral range, specifically in the near infrared spectral range. Therein, the spectral range of 380 nm to 760 nm may be referred to as the visible spectral range, wherein the wavelength range of light having wavelengths below this visible spectral range may be referred to as the ultraviolet spectral range, and wherein the wavelength range of light having wavelengths above the visible spectral range may be referred to as infrared spectral range. Therein, the spectral range of 760 nm to 1.4 µm may be referred to as the near infrared (NIR) spectral range. The spectral range of 1.4 µm to 3 µm may be referred to as long-wave near infrared spectral range or, alternatively, as short-wave middle infrared spectral range.

Consequently, the term "spectroscopic light source" as used herein is a broad term and is to be given its ordinary and customary meaning to a person of ordinary skill in the art and is not to be limited to a special or customized meaning. The term specifically may refer, without limitation, to an arbitrary device which is configured for emitting light, such as light with predefined and/or controlled optical properties, for a spectroscopic measurement. The spectroscopic light source may specifically be configured for emitting light with stable optical properties. As an example, the spectroscopic light source may generate light over at least one wavelength range, wherein, specifically over longer periods of time, a light intensity is kept at at least one predefined value for each wavelength within the wavelength range.

The spectroscopic light source comprises at least one light emitting element. The term "light emitting element" as used herein is a broad term and is to be given its ordinary and customary meaning to a person of ordinary skill in the art and is not to be limited to a special or customized meaning. The term specifically may refer, without limitation, to a device configured for emitting light. Specifically, the light emitting element may be configured for emitting light in an isotropic fashion, i.e. uniformly in all spatial directions. As an example, the light emitting element may be configured for emitting light due to thermal heating and/or may be or may comprise at least one thermal radiator. Such thermal heating may specifically be induced by applying electric power to the light emitting element, e.g. for heating up an electric resistor. Thus, the light emitting element may comprise at least one electric connection and/or at least one filament. Additionally or alternatively, the light emitting element may comprise at least one of a light emitting diode and a laser diode. Further kinds of light emitting elements may also be feasible.

The spectroscopic light source comprises at least one electronic circuit. The electronic circuit is configured for applying electric power, specifically a voltage, to the light emitting element. The term "electronic circuit" as used herein is a broad term and is to be given its ordinary and customary meaning to a person of ordinary skill in the art and is not to be limited to a special or customized meaning. The term specifically may refer, without limitation, to an assembly of at least two electronic components such as electronic components independently selected from the group consisting of electric power sources, resistors, inductors, capacitors, diodes, operational amplifiers or transistors, which are at least partially interconnected through one or more conductive elements such as wires and/or traces. The electronic circuit may be configured for generating at least one electric output, e.g. a voltage, in a controlled fashion. As an example, the electronic circuit may be configured for systematically varying a voltage applied to the light emitting element over time. Thus, as an example, the electronic circuit may comprise at least one controllable electric power source, current source or voltage source.

The spectroscopic light source comprises at least one housing. The housing at least partially surrounds the light emitting element. The term "housing" as used herein is a broad term and is to be given its ordinary and customary meaning to a person of ordinary skill in the art and is not to be limited to a special or customized meaning. The term specifically may refer, without limitation, to a mechanical cover configured for at least partially shielding elements in its interior. The housing may specifically be configured for at least partially shielding elements in its interior from external influences of mechanical nature, e.g. from collisions with further objects and/or from vibrations. The housing may comprise at least one wall, specifically at least one solid and nondeformable wall. The housing may comprise at least one vibration damping. The housing may further specifically be configured for at least partially shielding electromagnetic radiation, specifically thermal radiation. The housing may at least partially shield light emitted by the light emitting element, wherein the light may at least partially be prevented from leaving the spectroscopic light source by the housing. As an example, the housing, which at least partially surrounds the light emitting element, may comprise at least one wall, wherein the wall may be configured for preventing further objects from touching and potentially damaging the light emitting element, wherein the wall may additionally be configured for preventing light emitted by the light emitting element from leaving the spectroscopic light source in at least one spatial direction. The wall may comprise at least opening through which the light can pass.

The spectroscopic light source comprises at least two output channels going through the housing. Each one of the output channels is configured for decoupling at least one light beam from the spectroscopic light source. The term "output channel" as used herein is a broad term and is to be given its ordinary and customary meaning to a person of ordinary skill in the art and is not to be limited to a special or customized meaning. The term specifically may refer, without limitation, to an arbitrary element or device configured for transmitting light while optionally modifying the light during transmission. As an example, within the spectroscopic light source, light emitted by the light emitting element may be shielded by the housing and thus only leave the spectroscopic light source through at least one of the output channels. The output channel may comprise at least one opening, specifically at least one opening in the housing of the spectroscopic light source. The output channel my comprise at least one material which is at least partially transparent for light emitted by the light emitting element of the spectroscopic light source. The output channel may specifically comprise at least one element, more specifically at least one optical element, configured for modifying the light emitted by the light emitting element of the spectroscopic light source, which will be described in greater detail below.

The term "decoupling" as used herein is a broad term and is to be given its ordinary and customary meaning to a person of ordinary skill in the art and is not to be limited to a special or customized meaning. The term specifically may refer, without limitation, to an action of releasing at least one first entity from at least one second entity, wherein the first entity and the second entity may be independent of each other after the release. As an example, at least one light beam may be released by the spectroscopic light source through at least one of the output channels and may thus leave the spectroscopic light source through at least one of the output channels. The decoupled light beam and the spectroscopic light source may then be independent of each other meaning that the spectroscopic light source cannot manipulate the light beam anymore. The term "light beam" as used herein is a broad term and is to be given its ordinary and customary meaning to a person of ordinary skill in the art and is not to be limited to a special or customized meaning. The term specifically may refer, without limitation, to an amount of light, specifically light emitted anisotropically into at least one direction, such as a directional projection of light. The light beam may specifically travel in one specific direction over at least one spatial distance in an anisotropic fashion. The light beam may be scattered, specifically reflected, which may lead to a change of the direction of the light beam or at least of part of a light intensity of the light beam. The light beam may be split into two or more subordinate light beams each travelling in a different direction. The light beam may have a specified or determinable width, which may increase and/or decrease as a function of a longitudinal position along e.g. an optical axis of the light beam.

The spectroscopic light source is configured for independently controlling each one of the output channels. The term "independently controlling" as used herein is a broad term and is to be given its ordinary and customary meaning to a person of ordinary skill in the art and is not to be limited to a special or customized meaning. The term specifically may refer, without limitation, to an action of regulating a first entity while in parallel or in a time shifted manner regulating a second entity selectively equally or differently. As an example, a first element may be brought into a first output channel of the spectroscopic light source while in a second output channel no element may be brought in and/or a second element may be brought in, wherein the first and the second element may be different. The first element and the second element may both be elements of the same kind which, however, may have different specific properties, e.g. lenses with a different focus or modulating elements with different modulation frequencies. The first element and the second element may belong to different kinds of elements. For example the first element may be an aperture and the second element may be an optical filter. Further examples will be outlined below. Thus, a first light beam which is decoupled through the first output channel may be manipulated differently than a second light beam which is decoupled through the second output channel.

The light emitting element may comprise at least one incandescent lamp, specifically at least one halogen-filled incandescent light bulb. The term "incandescent lamp" as used herein is a broad term and is to be given its ordinary and customary meaning to a person of ordinary skill in the art and is not to be limited to a special or customized meaning. The term specifically may refer, without limitation, to a light emitting element comprising at least one heated filament configured for emitting light. The incandescent lamp may comprise at least one light bulb having the at least one filament positioned inside. The filament may comprise at least one wire, specifically at least one coiled wire. The filament may comprise tungsten. The light bulb may be a glass light bulb filled with an inert gas. The inert gas may specifically comprise argon and/or nitrogen. Additionally, the glass light bulb may be filled with a halogen. The halogen may specifically comprise iodine and/or bromine. When applying electric power to the light emitting element, electric current flows through the filament and increases the temperature of the filament such that the filament emits thermal radiation. The incandescent lamp may specifically be configured for emitting light in the infrared spectral range.

The housing may at least partially surround the electronic circuit. Thus, the housing may at least partially protect the electronic circuit from external influences, e.g. dust, dirt or water. Specifically, sensitive components of the electronic circuit may be placed inside the housing, whereas rugged components of the electronic circuit may be placed outside the housing. The housing may further be configured for stabilizing a temperature of the spectroscopic light source, specifically of the light emitting element. Thus, the housing may be configured for dissipating heat from the light emitting element which may specifically comprise a thermal radiator as indicated above.

The spectroscopic light source may be configured for turning on and off at least one of the output channels. Thus, in at least one of the output channels no light beam may be decoupled from the spectroscopic light source, at least as long as the output channel is turned off. As an example, a light blocking element, e.g. a shutter, may be placed in the output channel, e.g. at an end of the output channel, for turning the output channel off. For turning the output channel on again, the light blocking element may be removed from the output channel.

The spectroscopic light source may be configured for modulating the light beam in at least one of the output channels. The spectroscopic light source may specifically be configured for modulating at least one of an amplitude of the light beam, a frequency of the light beam and a duty cycle of the light beam. The term "modulating" as used herein is a broad term and is to be given its ordinary and customary meaning to a person of ordinary skill in the art and is not to be limited to a special or customized meaning. The term specifically may refer, without limitation, to a process of changing, specifically periodically changing, at least one property of light, specifically one or both of an intensity or a phase of the light. As the skilled person will know, the intensity again relates to an amplitude of the light. The modulation may be a full modulation from a maximum value to zero, or may be a partial modulation, from a maximum value to an intermediate value greater than zero.

The spectroscopic light source may specifically be configured for independently modulating the light beams in each one of the output channels. Thus, a first output channel may modulate a first light beam which is decoupled through the first output channel differently than a second output channel may modulate a second light beam which is decoupled through the second output channel. As an example, the first light beam may be modulated at a different frequency than the second light beam. The fact that the light beams may be modulated differently may specifically allow for synchronous measurements of a measurement object on multiple optical paths. Due to the difference in modulation, it may be possible to distinguish between the light beams, even if they are detected by one and the same detector. The spectroscopic light source may be configured for modulating an amplitude of the light beam in at least one of the output channels at a frequency from 0 Hz to 1000 Hz, preferably from 0.5 Hz to 1000 Hz, more preferably from 1 Hz to 500 Hz, more preferably from 8 Hz to 128 Hz.

The housing may comprise an inner housing at least partially surrounding the light emitting element. The housing may further comprise an outer housing at least partially surrounding the inner housing. The inner housing and the outer housing may each comprise at least two openings as part of the output channels. At least one of the output channels may comprise at least one modulating element for modulating the respective light beam. The modulating element may be located in an intermediate space between the inner housing and the outer housing, specifically in between the respective openings in the inner housing and the outer housing. Thus, the modulating element may be shielded from external influences by the outer housing, e.g. from dirt. At the same time, the modulating element may be shielded by the inner housing from heat which may be generated by the light emitting element. This fact may contribute to a reliable and secure operation of the modulating element as well as to a long lifetime.

The term "modulating element" as used herein is a broad term and is to be given its ordinary and customary meaning to a person of ordinary skill in the art and is not to be limited to a special or customized meaning. The term specifically may refer, without limitation, to an arbitrary element configured for modulating light. Specifically, the modulating element may be configured for modulating an amplitude of at least one light beam from a maximum value to a minimum value, specifically to zero, by periodically blocking and/or weakening at least a part of an intensity of the light beam within one of the output channels. The modulating element may be configured e.g. for mechanically modulating the light, e.g. by using a rotating chopper wheel, and/or for electronically modulating the light, e.g. by using an electrooptic effect and/or an acoustoptic effect, e.g. by using a Pockels cell and/or a Kerr cell. Further examples for the modulating element will be given below in greater detail. The modulating element may be mounted to the inner housing. The electronic circuit may at least partially be surrounded by the outer housing. The housing may comprise at least one base element. The inner housing and the outer housing may directly or indirectly rest on the base element. The electronic circuit may be received within the outer housing underneath the inner housing. The light emitting element may be mounted to the electronic circuit. The light emitting element may protrude from the electronic circuit into the inner housing.

At least one optical element may be located inside the outer housing, specifically within at least one of the openings in the inner housing. The optical element may comprises lenses received in each of the openings of the inner housing. The term "optical element" as used herein is a broad term and is to be given its ordinary and customary meaning to a person of ordinary skill in the art and is not to be limited to a special or customized meaning. The term specifically may refer, without limitation, to an arbitrary element configured for changing at least one optical property of incident light, e.g. an intensity of the light or a direction of at least a part of the light. The light may scatter at the optical element. The light may at least partially be reflected and/or absorbed by the optical element.

The spectroscopic light source may further comprise at least one actuator. The term "actuator" as used herein is a broad term and is to be given its ordinary and customary meaning to a person of ordinary skill in the art and is not to be limited to a special or customized meaning. The term specifically may refer, without limitation, to an arbitrary device which is configured for exerting at least one force and/or at least one action onto at least one element and/or which is configured for changing at least one property of the element. The actuator may specifically be or may comprise at least one mechanical actuator configured for exerting at least one mechanical action onto the element. The at least one mechanical actuator specifically may comprise at least one motor, such as at least one electrical motor. The at least one actuator specifically may be or may comprise at least one rotating actuator, such as a rotor. In addition to mechanical actuators, other types of actuators are also feasible, such as one or more of: an electrical actuator, an electromechanical actuator, an optical actuator, and optomechanical actuator. Specifically, the actuator may be configured for moving at least one element into and/or out of and/or within at least one of the optical channels of the spectroscopic light source. As an example, the actuator may be configured for moving at least one optical element, e.g. an optical filter, into at least one of the output channels. Further, the actuator may be configured for modulating at least one light beam in at least one of the output channels of the spectroscopic light source.

The actuator may comprise at least one modulating element, specifically at least one of a shutter and a chopper wheel. The term "shutter" as used herein is a broad term and is to be given its ordinary and customary meaning to a person of ordinary skill in the art and is not to be limited to a special or customized meaning. The term specifically may refer, without limitation, to an arbitrary device configured for blocking light for a predetermined period of time. The shutter may comprise at least one opaque element which may be movable between at least a two different spatial positions, wherein a different amount of light may be blocked in each of the at least two spatial positions. Specifically, in a first position the no light may be blocked and in a second position all light may be blocked. As an example, the opaque element may be a pivoting opaque element, which may be configured to pivot between the first position and the second position. The shutter may further comprise at least one of a spring and a catch mechanism. As indicated above, the shutter may also be used for turning at least one of the output channels on and off by moving the shutter into and out of the output channel. Further, by moving the shutter into and out of the output channel in a predetermined manner, specifically periodically, at least one light beam, which is decoupled through the output channel, may be modulated.

The term "chopper wheel" as used herein is a broad term and is to be given its ordinary and customary meaning to a person of ordinary skill in the art and is not to be limited to a special or customized meaning. The term specifically may refer, without limitation, to a rotatable sector aperture configured for modulating light. The chopper wheel may specifically be configured for periodically blocking a light intensity from a maximum value to zero. The sector aperture may comprise at least one opaque sector blocking all incident light intensity. Specifically, the chopper wheel may be arranged for periodically moving the at least one opaque sector into at least one of the output channels of the spectroscopic light source during a rotation of the chopper wheel. Thus, the amplitude of at least one light beam which is decoupled through the output channel may be modulated at a corresponding frequency.

The actuator may comprise at least one stepper motor. The term "stepper motor" as used herein is a broad term and is to be given its ordinary and customary meaning to a person of ordinary skill in the art and is not to be limited to a special or customized meaning. The term specifically may refer, without limitation, to an electrical motor configured for dividing a full rotation of a rotor of the electrical motor into a number of individually approachable steps with equal step size. Specifically, a shutter and/or a chopper wheel of the spectroscopic light source may be driven by a stepper motor. Further elements, specifically optical elements, may be moved into at least one of the output channels by using a stepper motor. As indicated above, at least one of the output channels may further comprise at least one optical element, specifically a moveable optical element. Thus, the optical element may be configured for being moved into and/or out of and/or within the output channel. The optical element may comprise at least one of a lens, specifically a condenser lens, an aperture, an optical filter, a grating, a dispersive element, a diffractive element, an active element such as a spatial light modulator and a mirror.

At least one of the output channels may comprise an optical fiber connector. The term "optical fiber" as used herein is a broad term and is to be given its ordinary and customary meaning to a person of ordinary skill in the art and is not to be limited to a special or customized meaning. The term specifically may refer, without limitation, to an optical waveguide configured for guiding light by internal total reflection, specifically a flexible waveguide configured for transmitting light between two spatial points, specifically over longer distances. The optical fiber may comprise a core material optionally surrounded by at least one cladding material, e.g. having a lower refractive index. Thus, the light may be guided in the core material due to total internal reflection, e.g. at one or more boundaries between the core material and the cladding material, e.g. as long as an angle between the light and the boundary is greater than a critical angle. The term "optical fiber connector" as used herein is a broad term and is to be given its ordinary and customary meaning to a person of ordinary skill in the art and is not to be limited to a special or customized meaning. The term specifically may refer, without limitation, to an arbitrary device configured for coupling light into an optical fiber or decoupling light from an optical fiber, specifically for coupling light into the core of the optical fiber, so that the light can be transmitted by the optical fiber. As an example, the optical fiber connector may comprise a holder for holding an end of the optical fiber. Further, the optical fiber connector may comprise at least one optical element such as at least one lens, e.g. for focusing light to be coupled into the optical fiber onto a free end of the optical fiber. The optical fiber connector may specifically be a plug-in optical fiber connector. As an example, an optical fiber connector may be placed at an end of an output channel of the spectroscopic light source, so that a light beam can be decoupled from the spectroscopic light source into an optical fiber. The optical fiber connector may be mounted to an outer side of the housing, specifically to an outer side of the outer housing, more specifically to an outer side of the outer housing in the position of at least one of the openings in the outer housing. Specifically, the optical fiber connector may be plugged in the opening in the outer housing. Optionally, an adapter may be attached to the opening in the outer housing first and the optical fiber connector may be plugged in the adapter.

The electronic circuit may comprise at least one printed circuit board. The term "printed circuit board" as used herein, often abbreviated as "PCB", is a broad term and is to be given its ordinary and customary meaning to a person of ordinary skill in the art and is not to be limited to a special or customized meaning. The term specifically may refer, without limitation, to an electrically non-conductive, planar substrate, also denoted as "board", on which at least one sheet of an electrically conductive material, in particular a copper layer, is applied, specifically laminated, to the substrate, and which, in addition, comprises one or more electronic, electrical, and/or optical elements. Other terms which refer to this type of circuit carrier are printed circuit assembly, short "PCA", printed circuit board assembly, short "PCB assembly" or "PCBA", circuit card assembly, short "CCA", or simply "card". In the PCB, the electrically insulating substrate may comprise a glass epoxy, wherein a cotton paper impregnated with a phenolic resin, typically tan or brown, may also be used as substrate material. Depending on a number of sheets, the printed circuit board may be a single-sided PCB, a two-layer or double-sided PCB, or a multi-layer PCB, wherein different sheets may be connected with each other by using so-called "vias". A double-sided PCB may have metal on both sides, while a multi-layer PCB may be designed by sandwiching additional metal layers between further layers of electrically insulating material. Further, by using two double-sided PCBs, a four-layer PCB may be generated. In a multi-layer PCB, the layers can be laminated together in an alternating manner, such as in an order of metal, substrate, metal, substrate, metal, etc., wherein each metal layer may be individually etched and wherein any internal vias may be plated through before the multiple layers are laminated together. Further, the vias may be or comprise copper-plated holes which can, preferably, be designed as electrical tunnels through the electrically insulating substrate. For this purpose, through-hole components may also be used which may, usually, be mounted by wire leads passing through the substrate and soldered to tracks or traces on the other side.

The printed circuit board may comprise at least one sensor configured for real-time monitoring of at least one of a voltage across the light emitting element; a current through the light emitting element; an electric power supplied to the light emitting element; a resistance of the light emitting element; a temperature of the light emitting element, wherein the light emitting element may be thermally coupled to the sensor. The term "sensor" as used herein is a broad term and is to be given its ordinary and customary meaning to a person of ordinary skill in the art and is not to be limited to a special or customized meaning. The term specifically may refer, without limitation, to an arbitrary device configured for detecting at least one condition or for measuring at least one measurement variable. As an example, the sensor may be a thermistor, specifically a negative temperature coefficient (NTC) thermistor, which may be thermally coupled to the light emitting element via at least one thermally conductive material, e.g. copper. Further, the sensor may for example comprise at least one of a voltage meter, a current meter, a power meter and a resistance meter. The sensor may specifically be configured for monitoring the light emitting element indirectly, e.g. by measuring a supply voltage and a voltage drop at a predefined small series resistance. Further physical quantities, e.g. at least one of an electric power, an electric current and a resistance, may be derived from the measurements.

The electronic circuit may comprise at least one interface, such as a wireless and/or a wire-bound electronic or electric interface, specifically a USB port accessible from outside the housing. The term "interface" as used herein is a broad term and is to be given its ordinary and customary meaning to a person of ordinary skill in the art and is not to be limited to a special or customized meaning. The term specifically may refer, without limitation, to an arbitrary device forming a boundary configured for transferring information. In particular, the interface may be configured for transferring information from a computational device, e.g. a computer, such as to send or output information, e.g. onto another device. Additionally or alternatively, the interface may be configured for transferring information onto a computational device, e.g. onto a computer, such as to receive information. The communication interface may specifically provide means for transferring or exchanging information. In particular, the interface may provide a data transfer connection, e.g. Bluetooth, NFC, inductive coupling or the like. As an example, the interface may be or may comprise at least one port comprising one or more of a network or internet port, a USB-port and a disk drive. The interface may be at least one web interface. Specifically, via the interface, a data transfer between the electronic circuit and at least one external device, e.g. a computer, a tablet or a smartphone, may be possible. As an example, sensor data may be transferred from the electronic circuit to the external device via the interface. As a further example, commands for controlling the electronic circuit may be transferred from the external device via the interface, e.g. commands for generating at least one electric output of the electronic circuit such as an electric power and specifically a voltage.

The electronic circuit may comprise at least one controller, specifically at least one micro controller. The controller may be configured for controlling at least one of the electric power applied to the light emitting element. The controller may be configured for controlling at least one of the output channels. The controller may be configured for controlling the sensor and/or the interface. The term "controller" as used herein is a broad term and is to be given its ordinary and customary meaning to a person of ordinary skill in the art and is not to be limited to a special or customized meaning. The term specifically may refer, without limitation, to an arbitrary electronic device configured for controlling one or more operations of the spectroscopic light source or parts of the spectroscopic light source. The controller specifically may be programmable. Thus, the controller specifically may comprise at least one processor. The term "processor" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor may be configured for processing basic instructions that drive the computer or system. As an example, the processor may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. In particular, the processor may be a multi-core processor. Specifically, the processor may be or may comprise a central processing unit (CPU). Additionally or alternatively, the processor may be or may comprise a microprocessor, thus specifically the processor's elements may be contained in one single integrated circuitry (IC) chip. Additionally or alternatively, the processor may be or may comprise one or more application-specific integrated circuits (ASICs) and/or one or more field-programmable gate arrays (FPGAs) or the like.

As indicated above, the controller may be configured for controlling at least one of the electric power applied to the light emitting element, specifically a voltage applied to the light emitting element. Consequently, the controller may be configured for controlling an emission of the light emitting element, specifically according to the specifications of a user of the spectroscopic light source. The controller may be configured for using a look-up table for matching an electric power applied to the light emitting element with an emission of the light emitting element. As an example, the light emitting element may be an incandescent lamp. The controller may control an electric power applied to the incandescent lamp and thus a temperature of the incandescent lamp. Consequently, the controller may control an intensity and a spectral distribution of thermal radiation emitted by the incandescent lamp. A connection between the electric power applied to the incandescent lamp and the temperature of the incandescent lamp may be known from a calibration measurement and may be recorded in a look-up table. Further, a connection between the temperature of the incandescent lamp and the intensity or the spectral distribution of the thermal radiation emitted by the incandescent lamp may be known from a calibration measurement and may be recorded in a look-up table.

The controller may be configured for performing a soft start and/or a soft stop of the light emitting element. The term "soft start" as used herein is a broad term and is to be given its ordinary and customary meaning to a person of ordinary skill in the art and is not to be limited to a special or customized meaning. The term specifically may refer, without limitation, to measures for power control when switching on a device. The measures may be configured for preventing an overload of the device. The measures may specifically limit a potentially large inrush current of the device. As an example, when switching the light emitting element of the spectroscopic light source on, a voltage ramp may be applied to the light emitting element over time going from zero to a target voltage for operation. The voltage ramp may be applied over a time interval varying from 1 s to 60 s, preferably from 2 s to 30 s, more preferably from 3 s to 10 s. Analogously, the term "soft stop" as used herein is a broad term and is to be given its ordinary and customary meaning to a person of ordinary skill in the art and is not to be limited to a special or customized meaning. The term specifically may refer, without limitation, to measures for power control when switching off a device. Specifically, a reverse voltage ramp may be applied compared the voltage ramp of the soft start. The soft start and/or the soft stop may specifically decrease an operational stress of the light emitting element of the spectroscopic light source. Thus, the soft start and/or the soft stop may increase a lifetime of the light emitting element. Further, a heat-up time of the light emitting element, which may have to be waited for until the light emitting element works stable, may be avoidable when using the soft start and/or the soft stop.

The controller may comprise at least one buck regulator. The buck regulator may comprise at least one feedback connection. The term "buck regulator" as used herein is a broad term and is to be given its ordinary and customary meaning to a person of ordinary skill in the art and is not to be limited to a special or customized meaning. The term specifically may refer, without limitation, to a DC-DC converter which is configured for modifying at least one input voltage to at least one output voltage which is smaller than or equal to the input voltage. Above and in the following, DC refers to direct current. The buck regulator may comprise at least one of a transistor, a diode, an inductor and a capacitor. As an example, the buck regulator may receive an input voltage, reduce the input voltage to a variable target voltage and provide the target voltage as an output voltage.

The controller may comprise at least one resistor network. The term "network" as used herein is a broad term and is to be given its ordinary and customary meaning to a person of ordinary skill in the art and is not to be limited to a special or customized meaning. The term specifically may refer, without limitation, to a group of at least partially interconnected components. As used herein, the term "resistor network" is a broad term and is to be given its ordinary and customary meaning to a person of ordinary skill in the art and is not to be limited to a special or customized meaning. The term specifically may refer, without limitation, to a network comprising at least one resistor. The resistor may be grounded. The resistor network may specifically comprise a plurality of resistors and wires and/or traces for at least partially interconnecting the resistors. The resistor network or at least parts of the resistor network may form at least one voltage divider. The controller may comprise at least one digital-analog-converter (DAC). The digital-analog-converter may be grounded. The digital-analog-converter may be configured for controlling a modification of an input voltage by the buck regulator. Specifically the digital-analog-converter may be connected to the resistor network, wherein the resistor network may further at least be connected to the feedback connection of the buck regulator. Thus, a digitally controlled output voltage of the digital-analog-converter may be summed into the feedback connection of the buck regulator.

The controller may comprise at least one shunt. The shunt may comprise at least one of a voltage meter and a current meter. The term "shunt" as used herein is a broad term and is to be given its ordinary and customary meaning to a person of ordinary skill in the art and is not to be limited to a special or customized meaning. The term specifically may refer, without limitation, to an arbitrary device configured for creating a low-resistance bypass for a current. Specifically, the shunt may be configured for current sensing and/or voltage sensing. As an example, the shunt may comprise a shunt resistor which is placed in parallel with a shunt voltage meter.

The spectroscopic light source may comprise at least one cooling device, specifically at least one of a fan and a heat sink. The term "cooling device" as used herein is a broad term and is to be given its ordinary and customary meaning to a person of ordinary skill in the art and is not to be limited to a special or customized meaning. The term specifically may refer, without limitation, to an arbitrary device configured for extracting thermal energy from at least one object. The cooling device may be configured for dissipating heat from the object. Thus, the cooling device may be configured for keeping a temperature of the object stable. The cooling device may be configured for actively reducing the temperature the object. The light emitting element, the electronic circuit and the cooling device may be spatially separated. This may specifically facilitate shielding the light emitting element and/or the electronic circuit from environmental influences, e.g. dirt or dust, which may particularly be important for explosion protection. This may result in a high protection level for the spectroscopic light source, up to full immersion into water.

In a further aspect of the present invention, a spectroscopic measurement system is proposed. The term "system" as used herein is a broad term and is to be given its ordinary and customary meaning to a person of ordinary skill in the art and is not to be limited to a special or customized meaning. The term specifically may refer, without limitation, to an arbitrary set of interacting or interdependent components or parts forming a whole. Specifically, the components may interact with each other in order to fulfill at least one common function. The at least two components may be handled independently or may be coupled or connectable. The term "spectroscopic measurement system" as used herein is a broad term and is to be given its ordinary and customary meaning to a person of ordinary skill in the art and is not to be limited to a special or customized meaning. The term specifically may refer, without limitation, to a system which is configured for a spectroscopic measurement.

The spectroscopic measurement system comprises at least one spectroscopic light source according to any one of the embodiments described above or below in further detail. The spectroscopic measurement system further comprises at least one detector. The detector is configured for detecting at least one light beam decoupled from the spectroscopic light source. The detector is further configured for generating at least one corresponding detector signal. The term "detector" as used herein is a broad term and is to be given its ordinary and customary meaning to a person of ordinary skill in the art and is not to be limited to a special or customized meaning. The term specifically may refer, without limitation, to an arbitrary device which is capable of qualitatively and/or quantitatively detecting light. Thus, the detector specifically may comprise at least one sensitive element which is capable of changing at least one measurable property depending on an illumination with light. The detector specifically may comprise one or more of: a photodiode, a phototransistor, a photoresistor, a semiconductor sensor, a photomultiplier, a photocell, a phototube, a thermal detector, a pyroelectric detector, a thermopile, a bolometer, a Golay cell, photochemical sensor. The detector may be a single detector having a single, uniform sensitive element or sensitive surface, or may be a detector having a plurality of sensitive elements, such as a pixelated sensor, e.g. a CCD or CMOS device. The detector may be equipped with at least one optical pass filter, specifically selected from at least one of an optical short pass filer, an optical long pass filter, or an optical band pass filter. The optical pass filter may be configured for transmitting light having a wavelength within a limited wavelength range.

The spectroscopic measurement system comprises at least one readout electronics configured for reading out the detector signal. The term "readout electronics" as used herein is a broad term and is to be given its ordinary and customary meaning to a person of ordinary skill in the art and is not to be limited to a special or customized meaning. The term specifically may refer, without limitation, to an arbitrary device configured for at least one of receiving, monitoring, interpreting and preprocessing the detector signal generated by the detector. The readout electronics may specifically be configured for generating a digital signal corresponding to the detector signal, wherein the digital signal may be suited for further computational processing. The readout electronics may comprise at least one readout integrated circuit configured for accumulating a photocurrent. The readout electronics may specifically comprise at least one digital readout integrated circuit, more specifically at least one digital pixel readout integrated circuit.

The readout electronics may comprise at least one lock-in amplifier configured for amplifying the detector signal. The term "lock-in amplifier" as used herein is a broad term and is to be given its ordinary and customary meaning to a person of ordinary skill in the art and is not to be limited to a special or customized meaning. The term specifically may refer, without limitation, to an arbitrary device configured for extracting and amplifying a measurement signal with at least one known property from a potentially very noisy environment. Specifically, the lock-in amplifier may be configured for extracting and amplifying a modulated measurement signal, more specifically a measurement signal which was modulated with a known frequency. As an example, the measurement signal may be modulated with a periodic signal with a known frequency. In such case, the periodic signal may be mixed with the measurement signal in the lock-in amplifier and the mixed signal may be filtered by using at least one low-pass filter. Other lock-in amplifier techniques taking into account a periodic modulation are generally known and may be used here. Such lock-in amplifier techniques may allow for distinguishing between different signals, specifically differently modulated signals, which were detected by one and the same detector. They may further allow to significantly reduce detector noise and thus increase a signal to noise ratio, which may for example enhance interferometric measurements, e.g. FTIR or white light spectroscopy.

The spectroscopic measurement system comprises at least one evaluation device configured for determining at least one item of information based on the detector signal. The term "evaluation device" as used herein is a broad term and is to be given its ordinary and customary meaning to a person of ordinary skill in the art and is not to be limited to a special or customized meaning. The term specifically may refer, without limitation, to an arbitrary device being configured for analyzing and/or interpreting data. The evaluation device may be or may comprise one or more integrated circuits, in particular at least one of an application-specific integrated circuit (ASIC), and/or a data processing device, in particular at least one of a digital signal processor (DSP), a field programmable gate arrays (FPGA), a microcontroller, a microcomputer, or a computer. Alternatively or in addition, the evaluation device may, particularly, be or be comprised by at least one electronic communication unit, specifically a smartphone or a tablet. Additional components may be feasible, in particular one or more preprocessing devices and/or data acquisition devices, in particular one or more devices for receiving and/or preprocessing of the detector signals, in particular one or more AD-converters and/or one or more filters. Further, the evaluation device may comprise one or more data storage devices, in particular for storing at least one electronic table, in particular at least one look-up table. Further, the evaluation device may comprise one or more interfaces, in particular one or more wireless interfaces and/or one or more wire-bound interfaces.

The evaluation device may be configured to execute and/or perform at least one computer program, in particular at least one computer program performing or supporting the step of generating the item of information. By way of example, one or more algorithms may be implemented which, by using the spectrometer signal as at least one input variable, may perform a transformation to the item of information. For this purpose, the evaluation device may, particularly, comprise at least one data processing device, in particular an electronic data processing device, which can be configured to generate the item of information by evaluating the at least one detector signal. Thus, the evaluation device may be configured to use the detector signal as an input variable and to generate the item of information by processing the input variable. The processing may be done in parallel, subsequently or even in a combined manner. The evaluation device may use an arbitrary process for generating the item information, in particular by calculation and/or using at least one stored and/or known relationship.

The term "item of information" as used herein is a broad term and is to be given its ordinary and customary meaning to a person of ordinary skill in the art and is not to be limited to a special or customized meaning. The term specifically may refer, without limitation, to at least one of data, knowledge or evidence providing a qualitative and/or quantitative description of at least one entity, such as on a physical property of an element or object. The item of information may for example refer to a chemical composition of a material. As an example, the spectroscopic measurement system may be used for analyzing at least one material. In such case, the at least one detector may for example detect a transmission of at least one light beam through the material at at least one wavelength. From at least one corresponding detector signal, an absorption spectrum of the material may be derived in the evaluation device, which may be characteristic for a specific chemical composition.

In a further aspect of the present invention, a method of operating the spectroscopic measurement system according to any one of the embodiments described above or below in further detail is proposed. The method comprises the following method steps:
a) applying electric power, specifically at least one voltage, to the light emitting element of the spectroscopic light source by using the electronic circuit;
b) emitting light by using the light emitting element;
c) decoupling at least one light beam from the spectroscopic light source by using at least one of the at least two output channels while independently controlling each one of the output channels;
d) illuminating at least one measurement object with the light beam;
e) detecting the light beam by using the detector of the spectroscopic measurement system and generating at least one corresponding detector signal;
f) reading out the detector signal by using the readout electronics of the spectroscopic measurement system; and
g) determining at least one item of information based on the detector signal by using the evaluation device of the spectroscopic measurement system.

The method steps a) - g) may be performed in the given order. It shall be noted, however, that a different order may also be possible. Further, one or more of the method steps may be performed once or repeatedly. Further, two or more of the method steps may be performed simultaneously or in a timely overlapping fashion. The method may comprise further method steps which are not listed. In step f), the detector signal may further be amplified by using the lock-in amplifier.

In step c), the controlling may comprise turning on and off at least one of the output channels. The controlling may comprise modulating the light beam in at least one of the output channels, specifically modulating at least one of an amplitude of the light beam, a frequency of the light beam and a duty cycle of the light beam. The controlling may comprise modulating an amplitude of the light beam in at least one of the output channels at a frequency from 0 Hz to 1000 Hz, preferably from 0.5 Hz to 1000 Hz, more preferably from 1 Hz to 500 Hz, more preferably from 8 Hz to 128 Hz.

In step c), at least two light beams may be decoupled from the spectroscopic light source. Each light beam may be decoupled through a different output channel of the spectroscopic light source. In step d), the measurement object may be illuminated by at least one of the at least two light beams. At least one light beam of the at least two light beams may be used as a reference when determining the item of information in step g). The spectroscopic measurement system may comprise at least one element configured for combining the two light beams. The term "reference" as used herein is a broad term and is to be given its ordinary and customary meaning to a person of ordinary skill in the art and is not to be limited to a special or customized meaning. The term specifically may refer, without limitation, to an arbitrary entity which is suitable for comparison purposes, specifically with respect to a measured signal. A comparison of the measured signal with the reference may specifically facilitate further processing and/or evaluating of the measured signal. Specifically, a difference between the measured signal and the reference may be used for further processing and/or evaluating of the measured signal. As an example, the measurement object may be illuminated by a first light beam, whereas a second light beam may be directly sent to the detector. However, it may also be possible to send at least two light beams to the measurement object. This may allow for synchronous spectroscopic measurements on the measurement object.

In step c), the independently controlling of the output channels may comprise modulating at least one light beam differently in the respective output channel than the at least one remaining light beam in the at least one remaining output channel. Specifically, two differently modulated light beams may be distinguishable, when detected by one and the same detector. As an example, a first light beam may be decoupled through a first output channel. In the first output channel, an amplitude of the first light beam may be modulated at a first frequency, e.g. by using a first chopper wheel. At the same time, a second light beam may be decoupled through a second output channel. In the second output channel, an amplitude of the second light beam may be modulated at a second frequency, e.g. by using a second chopper wheel. The first chopper wheel and the second chopper wheel may specifically be operated at different rotation frequencies, wherein the first chopper wheel and the second chopper wheel may be identical in design. Thus, it may be possible to detect the first light beam and the second light beam with one and the same detector while still being able to distinguish between them due to the difference in modulation.

The method may be computer-implemented. Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work.

The devices and methods according to the present invention may provide a large number of advantages over known devices and methods. In particular, the spectroscopic light source may be configured for simultaneously providing a plurality of individually adapted high power light beams for spectroscopic measurements. The light beams may be free beams or they may be fiber-coupled. They may each have single wavelengths or they may each extend over a wider spectral range, specifically within the infrared spectral range. Still, the spectroscopic light source in principle may require only one light emitting element, e.g. an off-shelf incandescent light bulb, and no beam splitters or further optical elements. This keeps the constructional complexity of the spectroscopic light source low and saves constructional space. With two or more output channels, the spectroscopic light source further automatically may comprise a built-in reference channel. Besides, several measurements can be conducted simultaneously by using different output channels for saving measurement time. Since the light beams can be adapted individually in the output channels of the spectroscopic light source, they can specifically also be modulated individually. Modulating different light beams at different modulation frequencies may allow for detecting the light beams with one and the same detector of the spectroscopic measurement system while still being able to distinguish between them. For this, common lock-in amplifier techniques can be used. The modulation further assists by reducing detector noise and thus facilitates a good signal to noise ratio.

Moreover, through the option of active stabilization, the spectroscopic light source may be configured for providing very stable light beams, both in short-term and in long-term. Therein, switching on and off the spectroscopic light source, generally may not affect the stability. Stress to the light emitting element can be significantly reduced through a soft start and a soft stop. With this solution, the spectroscopic light source generally may not require any heat-up time for the light emitting element to work stable. Because users will not have to wait for the heat-up time to pass by anymore before conducting reliable measurements, they are more likely to switch the spectroscopic light source off after each measurement if it is not needed anymore instead of leaving it on for a longer period of time. At the same time, several sensors can monitor the light emitting element in live and directly trigger a correction of potential malfunctions. All this may significantly increase the lifetime of the light emitting element.

Further, the light emitting element, the electronic circuit and the cooling device may be spatially separated in the spectroscopic light source. This specifically may allow for keeping the optics and electronics clean through preventing contact with the outer environment. This may again specifically be important in dirty or dusty environments, specifically with respect to explosion protection. The spectroscopic light source, thus, may be fully encapsulated and may be suited for hazardous location use. Further, the spectroscopic light source may offer a high protection level, e.g. up to full immersion into water. Specifically, the housing, which may comprise an inner housing and an outer housing, can facilitate this property. Sensitive elements can be placed inside the housing for protection. For even better protection, they can be placed between the inner housing and the outer housing. Thus, through the inner housing, they may be protected from electromagnetic radiation and specifically from heat emitted by the light emitting element, while, through the outer housing, they may simultaneously be protected from external influences.

A further advantage of the spectroscopic light source as proposed herein refers to the above-mentioned disadvantage of consecutive measurement regarding short-term fluctuations leading to an adding-up of noise. The two- or multi-output-channel setup as presently proposed, preferably by enabling parallel measurements of reference and sample, may compensate for this effect. The noise typically is identical for both output channels and paths and therefore does not add up.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: schematically shows an exemplary embodiment of a spectroscopic measurement system;
- Figure 2: shows an exemplary embodiment of a spectroscopic light source in an exploded view;
- Figure 3: shows an embodiment of a schematic circuit diagram of a controller for controlling an electric power applied to a light emitting element of a spectroscopic light source;
- Figures 4A-4E: show experimental results of stability measurements on an embodiment of a spectroscopic light source; and
- Figure 5: shows a flow chart of an embodiment of a method of operating a spectroscopic measurement system.

### Detailed description of the embodiments

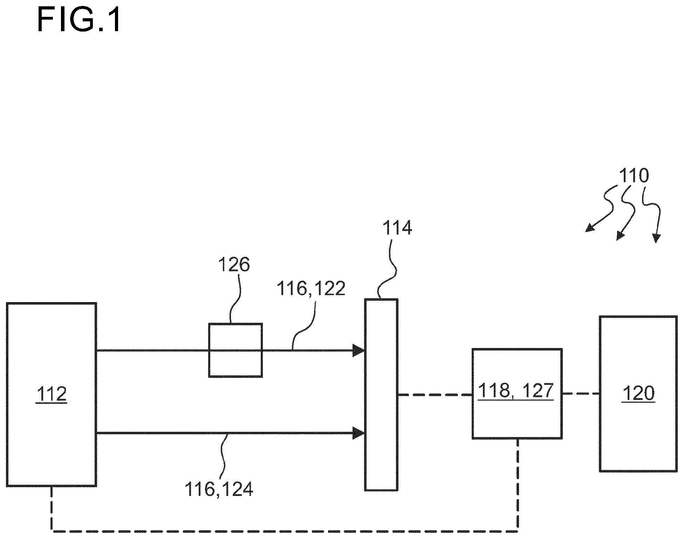

Figure 1 schematically shows an embodiment of a spectroscopic measurement system 110.

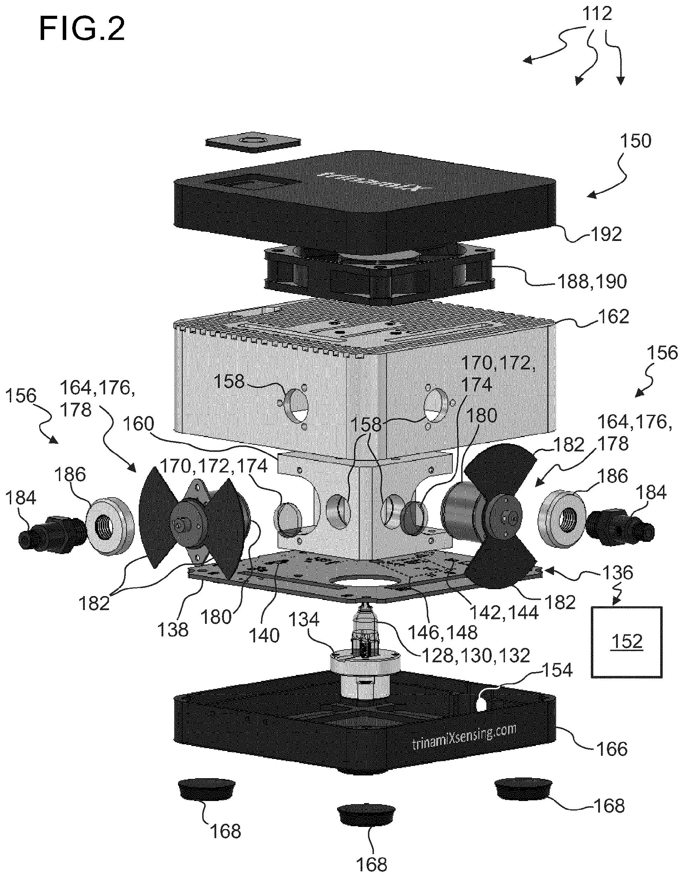

The spectroscopic measurement system 110 comprises at least one spectroscopic light source 112, which will be described below in further detail with reference to Figure 2. The spectroscopic measurement system 110 further comprises at least one detector 114. The detector 114 is configured for detecting at least one light beam 116 decoupled from the spectroscopic light source 112. The detector 114 is further configured for generating at least one corresponding detector signal. The spectroscopic measurement system 110 further comprises at least one readout electronics 118 configured for reading out the detector signal. The spectroscopic measurement system 110 further comprises at least one evaluation device 120 configured for determining at least one item of information based on the detector signal.

As Figure 1 shows, the spectroscopic light source 112 may be configured for generating two light beams 116, e.g. a measurement light beam 122 and a reference light beam 124. The measurement light beam 122 may be used for illuminating a measurement object 126 such as a sample. The measurement light beam 122 may scatter at the measurement object 126. Specifically, at least a part of an intensity of the measurement light beam 122 may be absorbed by the measurement object 126. The absorption may be characteristic for at least one physical property of the measurement object 126, e.g. for a chemical composition of the measurement object 126. At least a part of the intensity of the measurement light beam 122 may be transmitted through the measurement object 126 and reach the detector 114. The reference light beam 124 may be directed towards the detector 114 without interaction with the measurement object 126. The spectroscopic measurement system 110 may be configured for distinguishing between the measurement light beam 122 and the reference light beam 124. Specifically, the measurement light beam 122 and the reference light beam 124 may be modulated independently by the spectroscopic light source 112 making them distinguishable. As an example, the measurement light beam 122 and the reference light beam 124 may be modulated at different frequencies by the spectroscopic light source 112.

The detector 114 may at least be connected to the readout electronics 118, e.g. with a wireless connection and/or with a wired connection. The readout electronics 118 may be configured for generating a digital signal corresponding to the detector signal, wherein the digital signal may be suited for further computational processing. The readout electronics 118 may comprise at least one lock-in amplifier 127. The lock-in amplifier 127 may extract and amplify at least one detector signal in accordance with a predetermined modulation. The lock-in amplifier 127 may further at least be connected to the spectroscopic light source 112, e.g. with a wireless connection and/or with a wired connection. The spectroscopic light source 112 may be configured for forwarding information about a modulation of the light beams 116 to the lock-in amplifier 127. Specifically, the spectroscopic light source 112 may be configured for forwarding a modulation frequency of the light beams 116 to the lock-in amplifier 127, e.g. by using at least one reference signal. A phase of the reference signal may be synchronized to a phase of a measured detector signal, e.g. by using a phase shifter. The lock-in amplifier 127 may be connected to the evaluation device 120, e.g. with a wireless connection and/or with a wired connection. The lock-in amplifier 127 may be configured to forward at least one amplified detector signal to the evaluation device 120, e.g. an amplified detector signal corresponding to the measurement light beam 122 and/or an amplified detector signal corresponding to the reference light beam 124. The evaluation device 120 may be configured for processing and/or comparing the amplified detector signals, e.g. for calculating a difference and/or a quotient of them. From this, the evaluation device 120 may determine the at least one item of information, e.g. about a chemical composition of the measurement object 126.

Figure 2 shows an embodiment of the spectroscopic light source 112 in an exploded view. The spectroscopic light source 112 comprises at least one light emitting element 128. The light emitting element 128 may be configured for emitting light in an isotropic fashion in all spatial directions, specifically due to thermal heating. The light emitting element 128 may comprise at least one incandescent lamp 130, specifically at least one halogen-filled incandescent light bulb 132. The thermal heating may specifically be induced by applying electric power to at least one filament of the halogen-filled incandescent light bulb 132. Thus, the light emitting element 128 may comprise at least one electric connection, specifically at least one socket 134. The socket 134 may further at least partially mechanically hold the light emitting element 128.

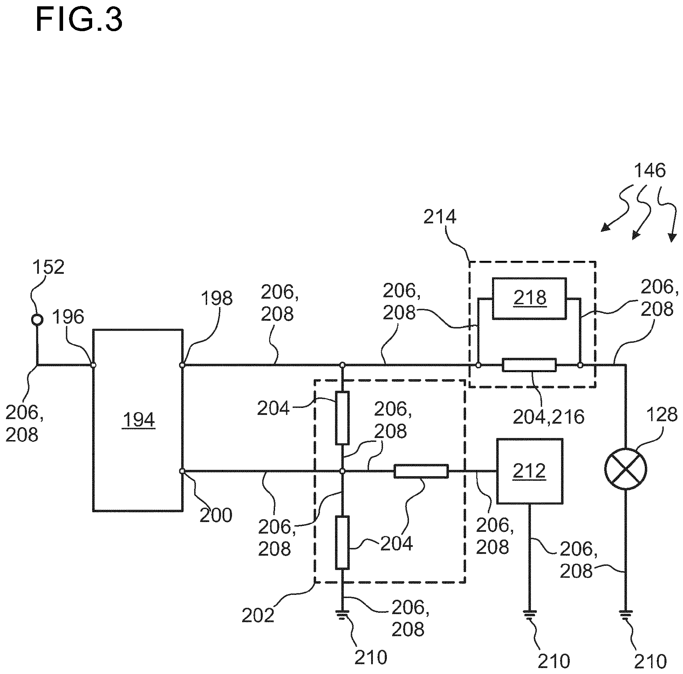

The spectroscopic light source 112 comprises at least one electronic circuit 136. The electronic circuit 136 is configured for applying electric power, specifically a voltage, to the light emitting element 128. The electronic circuit 136 may comprise at least one printed circuit board 138. The printed circuit board 138 may comprise at least one sensor 140. The sensor 140 may be configured for real-time monitoring of at least one of a voltage across the light emitting element 128; a current through the light emitting element 128; an electric power supplied to the light emitting element 128; a resistance of the light emitting element 128; a temperature of the light emitting element 128, wherein the light emitting element 128 may be thermally coupled to the sensor. As an example, the sensor 140 may be a thermistor, specifically a negative temperature coefficient (NTC) thermistor, which may be thermally coupled to the light emitting element 128 via at least one thermally conductive material, e.g. copper. Further, the sensor 140 may for example comprise at least one of a voltage meter, a current meter, a power meter and a resistance meter. The electronic circuit 136 may further comprise at least one interface 142, specifically a USB port 144. The electronic circuit 136 may further comprise at least one controller 146, specifically at least one micro controller 148. Specifically, the printed circuit board 138 may at least partially comprise the controller 146. The controller 146 may be configured for controlling the interface 142. The controller 146 may be configured for controlling the electric power applied to the light emitting element 128, which will be described in further detail below with reference to Figure 3.

The spectroscopic light source 112 comprises at least one housing 150. The housing 150 at least partially surrounds the light emitting element 128. The housing 150 may at least partially surround the entire electronic circuit 136 or at least a part thereof. Sensitive components of the electronic circuit 136 may be placed inside the housing 150, e.g. the printed circuit board 138. One or more components optionally also may be placed outside the housing, e.g. at least one power source 152. The housing 150 may comprise at least one cable feed-through 154, for connecting the components of the electronic circuit 136 inside the housing 150 with the components of the electronic circuit 136 outside the housing 150. The USB port 144 of the electronic circuit 136 may be accessible from outside the housing 150, e.g. also through the cable feed-through 154.

The spectroscopic light source 112 comprises at least two output channels 156 going through the housing 150. Each one of the output channels 156 is configured for decoupling at least one light beam 116 from the spectroscopic light source 112. Each one of the output channels 156 may comprise at least one opening 158 within the housing 150 of the spectroscopic light source 112. The housing 150 may be configured for shielding light emitted by the light emitting element 128, so that the light can only leave the spectroscopic light source 112 through the openings 158 of the output channels 156.

The spectroscopic light source 112 is configured for independently controlling each one of the output channels 156. The controller 146 may be configured for controlling at least one of the output channels 156. The spectroscopic light source 112 may be configured for turning on and off at least one of the output channels 156. The spectroscopic light source 112 may be configured for modulating the light beam 116 in at least one of the output channels 156, specifically for modulating at least one of an amplitude of the light beam 116, a frequency of the light beam 116 and a duty cycle of the light beam 116, specifically for independently modulating the light beams 116 in each one of the output channels 156. The spectroscopic light source 112 may specifically be configured for modulating an amplitude of the light beam 116 in at least one of the output channels 156 at a frequency from 0 Hz to 1000 Hz, preferably 0.5 Hz to 1000 Hz, more preferably from 1 Hz to 500 Hz, more preferably from 8 Hz to 128 Hz.

The housing 150 may comprise an inner housing 160 at least partially surrounding the light emitting element 128. The housing 150 may further comprise an outer housing 162 at least partially surrounding the inner housing 160. The inner housing 158 and the outer housing 162 may each comprise at least two openings 158 as part of the output channels 156. At least one of the output channels 156 may comprise at least one modulating element 164 for modulating the respective light beam 116. The modulating element 164 may be located in an intermediate space between the inner housing 160 and the outer housing 162, specifically in between the respective openings 158 in the inner housing 160 and the outer housing 162. The modulating element 164 may be mounted to the inner housing 160.

The electronic circuit 136 may at least partially be surrounded by the outer housing 162. Specifically, at least the printed circuit board 138 may be surrounded by the outer housing 162. The housing 150 may comprise at least one base element 166. The inner housing 160 and the outer housing 162 may directly or indirectly rest on the base element 166. Specifically, the outer housing 162 may directly rest on the base element 166. The electronic circuit 136 may be received within the outer housing 162 underneath the inner housing 160. The light emitting element 128 may be mounted to the electronic circuit 136. The light emitting element 128 may protrude from the electronic circuit 136 into the inner housing 160. The inner housing 160 may rest on the electronic circuit 136, specifically on the printed circuit board 138. The printed circuit board 138 may rest on the base element 166. The base element 166 may comprise a plurality of feet 168, which may specifically be vibration-reducing.

At least one optical element 170 may be located inside the outer housing 162, specifically within at least one of the openings 158 in the inner housing 160. Specifically, the optical element 170 may comprise lenses 172 received in each of the openings 158 of the inner housing 160. The lenses 172 may specifically be condenser lenses 174. The optical element 170 may further comprise at least one of an aperture, an optical filter, a dispersive element, a diffractive element, an active element such as a spatial light modulator and a mirror (not shown). The optical element 170 may be comprised by at least one of the output channels 156. The optical element 170 may specially be moveable. More specifically, the optical element 170 may be moveable into at least one of the output channels 156 and out of at least one of the output channels 156, respectively. Thus, the optical element 170 may be used for independently controlling each one of the output channels 156.

The spectroscopic light source 112 may comprise at least one actuator 176. The actuator 176 may comprise the modulating element 164. The modulating element 164 may specifically be or may comprise at least one chopper wheel 178. The actuator 176 may comprise at least one stepper motor 180. The stepper motor 180 may be configured for rotating the chopper wheel 178 with a predetermined frequency. This may be used for modulating the light beam 116 which is decoupled from the spectroscopic light source 112 through the output channel 156. The chopper wheel 178 may comprise at least one opaque sector 182 configured for blocking all incident light intensity. The chopper wheel 178 may be arranged for periodically moving the at least one opaque sector 182 into at least one of the output channels 156 of the spectroscopic light source 112 during a rotation of the chopper wheel 178. Thus, an amplitude of at least one light beam 116 which is decoupled through the respective output channel 156 may be modulated at a corresponding frequency. The actuator 176 may further be or may comprise at least one shutter which is not shown in the Figures.

At least one of the output channels 156 may comprise an optical fiber connector 184. The optical fiber connector 184 may be mounted to an outer side of the housing 150, specifically to an outer side of the outer housing 162, more specifically to an outer side of the outer housing 162 in the position of at least one of the openings 158 in the outer housing 162. Specifically, an adapter 186 may be attached to the opening 158 in the outer housing 162. The adapter 186 may comprise a thread. The optical fiber connector 184 may be configured for being screwed into the thread of the adapter 186.

The spectroscopic light source 112 may comprise at least one cooling device 188. The cooling device 188 may be or may comprise at least one fan 190. The housing 150 may comprise at least one top cover 192. The fan 190 may be mounted to the top cover 192. The cooling device may further be or may comprise at least on heat sink which is not shown in the Figures. The light emitting element 128, the electronic circuit 136 and the cooling device 188 may be spatially separated. This may specifically facilitate shielding the light emitting element 128 and/or the electronic circuit 136 from environmental influences, e.g. dirt or dust, which may particularly be important for explosion protection.

Figure 3 shows an embodiment of a schematic circuit diagram of the controller 146 for controlling an electric power applied to the light emitting element 128 of the spectroscopic light source 112. The controller 146 may be configured for performing a soft start and/or a soft stop of the light emitting element 128. Specifically, when switching the light emitting element 128 on and off, respectively, a voltage ramp may be applied to the light emitting element 128 over time. The voltage ramp may be applied over a time interval varying from 1 s to 60 s, preferably from 2 s to 30 s, more preferably from 3 s to 10 s. The controller 146 may comprise at least one buck regulator 194. The buck regulator may comprise at least one input connection 196 for receiving electric power from the power source 152, specifically an input voltage. The buck regulator 194 may comprise at least one output connection 198 for giving out an output voltage. The buck regulator 194 may comprise at least one feedback connection 200. The controller 146 may comprise at least one resistor network 202. The resistor network 202 may comprise at least one resistor 204. Specifically, the resistor network 202 may comprise three resistors 204 and wires 206 and/or traces 208 for at least partially interconnecting the three resistors 204. At least one of the resistors 200 may be grounded. The ground potential or just ground is denoted with reference sign 210 in Figure 3. The resistor network 202 may form a voltage divider. The controller may comprise at least one digital-analog-converter 212. The digital-analog-converter 212 may be grounded. The digital-analog-converter 212 may be configured for controlling a modification of an input voltage by the buck regulator 194 by using the feedback connection 200. The controller 146 may comprise at least one shunt 214. The shunt 214 may be configured for current sensing and/or voltage sensing. Specifically, the shunt 214 may comprise a shunt resistor 216, which is placed in parallel with a shunt voltage meter 218.

The power source 152 may provide an input voltage to the buck regulator 194 via the input connection 196, specifically a DC input voltage. The buck regulator 194 may reduce the input voltage to an output voltage which is given out to the shunt 214 and the resistor network 202 via the output connection 198. The output voltage may be digitally controlled by using the digital-analog-converter 212. The digital-analog-converter 212 may convert a predetermined digital signal, e.g. from a measurement computer, to an analog voltage. The digital-analog-converter 212 may be connected to the resistor network 202, wherein the resistor network 202 may further be connected to the feedback connection 200 of the buck regulator 194. Thus, the digitally controlled analog voltage of the digital-analog-converter 212 may be summed into the feedback connection 200 of the buck regulator 194. An output current corresponding to the output voltage may further be measured by measuring a voltage drop over the shunt resistor 216 and using Ohm's law, before the output voltage and the output current may be applied to the light emitting element 128. Specifically, a current loss over the shunt voltage meter 218 may be negligible, e.g. due to using a low-resistance shunt resistor 216. Output voltage and output current can eventually be multiplied for calculating the electric power applied to the light emitting element 126.

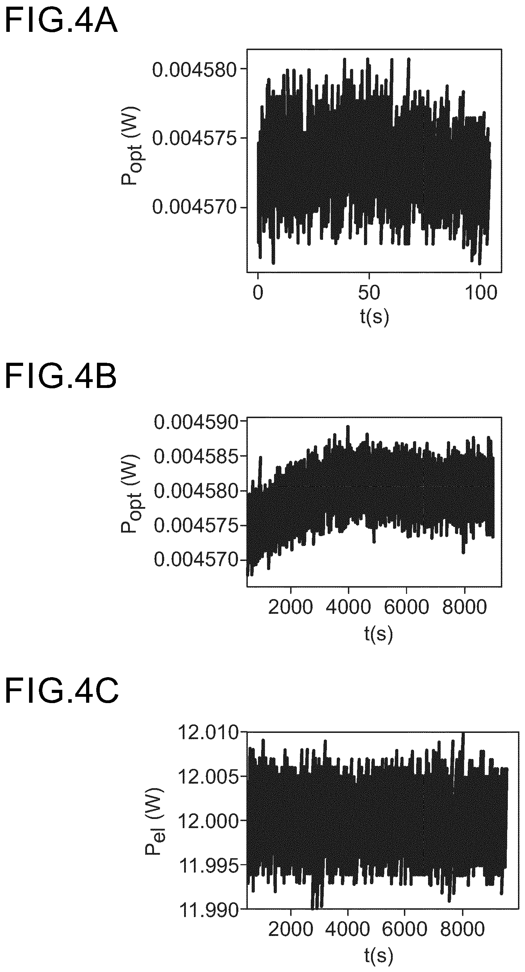

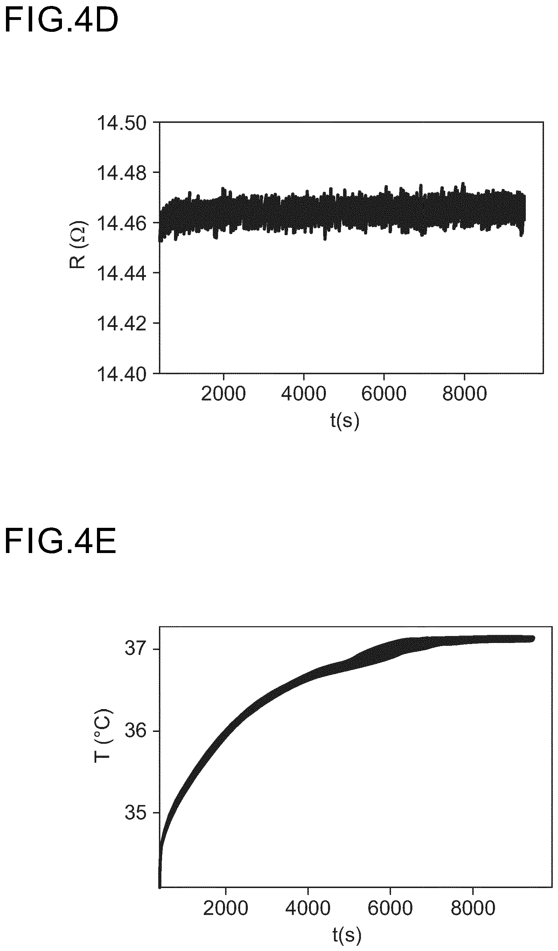

Figures 4A-4E show experimental results of stability measurements on an embodiment of the spectroscopic light source 112. Figure 4A shows a short term stability measurement on the spectroscopic light source 112 over a time t of approximately 100 s. The optical power output Pₒₚₜ of the light emitting element 128 may be measured by using a PM400 power meter from Thorlabs with a S122C germanium power meter head. The measurement reveals an average optical power output of 4.573 mW with a standard deviation of 2.3 µW. Thus, the optical power output can be considered as very stable over short terms. Figures 4B-4E all show long term stability measurements over more than 8000 s. As Figure 4B shows, for the first approximately 4000 s, the optical power output in fact slightly increases. After the initial increase, the optical power output remains at approximately 4.580 mW in a highly stable fashion. At the same time, as Figure 4C shows, the electric power Pₑₗ applied to the light emitting element 128 by the electronic circuit 136 remains constant at approximately 12 W. As indicated above, the electric power can be derived from sensor measurements. Specifically, the voltage applied to the light emitting element 128 may be controlled by using the controller 146, more specifically by using the digital-analog-converter 212. In this respect, reference may be made to the schematic circuit diagram depicted in Figure 3 and the corresponding part of the description. As further indicated in this context, the current applied to the light emitting element 128 may be measured by using the shunt 214. Figures 4D and 4E show further sensor data. Figure 4D shows that the resistance R of the light emitting element 128 constantly remains at approximately 14.46 Ω within the long term measurement over more than 8000 s. Figure 4E shows that the temperature T increases to up to approximately 37°C within the first approximately 6000 s and then stays at this temperature further on in a highly stable fashion. Such measurements may form a basis for generating a temperature calibration table for the spectroscopic light source 112.

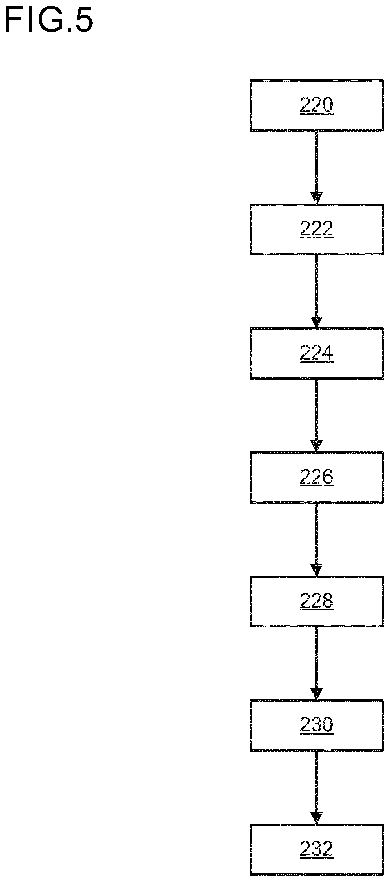

Figure 5 shows a flow chart of an embodiment of a method of operating the spectroscopic measurement system 110. The method of operating the spectroscopic measurement system 110 comprises the following measurement steps:
a) (denoted with reference sign 220) applying electric power, specifically at least one voltage, to the light emitting element 128 of the spectroscopic light source 112 by using the electronic circuit 136;
b) (denoted with reference sign 222) emitting light by using the light emitting element 128;
c) (denoted with reference sign 224) decoupling at least one light beam 116 from the spectroscopic light source 112 by using at least one of the at least two output channels 156 while independently controlling each one of the output channels 156;
d) (denoted with reference sign 226) illuminating at least one measurement object 126 with the light beam 116;
e) (denoted with reference sign 228) detecting the light beam 116 by using the detector 114 of the spectroscopic measurement system 110 and generating at least one corresponding detector signal;
f) (denoted with reference sign 230) reading out the detector signal by using the readout electronics 118 of the spectroscopic measurement system 110; and
g) (denoted with reference sign 232) determining at least one item of information based on the detector signal by using the evaluation device 120 of the spectroscopic measurement system 110.

The method steps a) - g) may be performed in the given order. It shall be noted, however, that a different order may also be possible. Further, one or more of the method steps may be performed once or repeatedly. Further, two or more of the method steps may be performed simultaneously or in a timely overlapping fashion. The method may comprise further method steps which are not listed. In step f), the detector signal may further be amplified by using the lock-in amplifier 127.

In step c), the controlling may comprise turning on and off at least one of the output channels 156. The controlling may comprise modulating the light beam 116 in at least one of the output channels 156, specifically modulating at least one of an amplitude of the light beam 116, a frequency of the light beam 116 and a duty cycle of the light beam 116. The controlling may comprise modulating an amplitude of the light beam 116 in at least one of the output channels 156 at a frequency from 0 Hz to 1000 Hz, preferably from 0.5 Hz to 1000 Hz, more preferably from 1 Hz to 500 Hz, more preferably from 8 Hz to 128 Hz.

In step c), at least two light beams 116 may be decoupled from the spectroscopic light source 112. Each light beam 116 may be decoupled through a different output channel 156 of the spectroscopic light source 112. In step d), the measurement object 126 may be illuminated by at least one of the at least two light beams 116. At least one light beam 116 of the at least two light beams 116 may be used as a reference when determining the item of information in step g). In step c), the independently controlling of the output channels 156 may comprise modulating at least one light beam 116 differently in the respective output channel 156 than the at least one remaining light beam 116 in the at least one remaining output channel 156.

The method may be computer-implemented. Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work.

### List of reference numbers

- 110: spectroscopic measurement system
- 112: spectroscopic light source
- 114: detector
- 116: light beam
- 118: readout electronics
- 120: evaluation device
- 122: measurement light beam
- 124: reference light beam
- 126: measurement object
- 127: lock-in amplifier
- 128: light emitting element
- 130: incandescent lamp
- 132: halogen-filled incandescent light bulb
- 134: socket
- 136: electronic circuit
- 138: printed circuit board
- 140: sensor
- 142: interface
- 144: USB port
- 146: controller
- 148: micro controller
- 150: housing
- 152: power source
- 154: cable feed-through
- 156: output channel
- 158: opening
- 160: inner housing
- 162: outer housing
- 164: modulating element
- 166: base element
- 168: foot
- 170: optical element
- 172: lens
- 174: condenser lens
- 176: actuator
- 178: chopper wheel
- 180: stepper motor
- 182: opaque sector
- 184: optical fiber connector
- 186: adapter
- 188: cooling device
- 190: fan
- 192: top cover
- 194: buck regulator
- 196: input connection
- 198: output connection
- 200: feedback connection
- 202: resistor network
- 204: resistor
- 206: wire
- 208: trace
- 210: ground
- 212: digital-analog-converter (DAC)
- 214: shunt
- 216: shunt resistor
- 218: shunt voltage meter
- 220: method step a)
- 222: method step b)
- 224: method step c)
- 226: method step d)
- 228: method step e)
- 230: method step f)
- 232: method step g)

## Claims

1. A spectroscopic light source (112) comprising
- at least one light emitting element (128);
- at least one electronic circuit (136) configured for applying electric power to the light emitting element (128); and
- at least one housing (150), wherein the housing (150) at least partially surrounds the light emitting element (128), wherein the housing (150) comprises an inner housing (160) at least partially surrounding the light emitting element (128); and
- at least two output channels (156) going through the housing (150), wherein each one of the output channels (156) is configured for decoupling at least one light beam (116) from the spectroscopic light source (112);
**characterized in that**
the spectroscopic light source (112) is configured for independently controlling each one of the output channels (156), wherein the housing (150) further comprises an outer housing (162), the outer housing (162) at least partially surrounding the inner housing (160), wherein the inner housing (160) and the outer housing (162) each comprise at least two openings (158) as part of the output channels (156), wherein the housing (150) comprises at least one base element (166), wherein the inner housing (160) and the outer housing (162) directly or indirectly rest on the base element (166), wherein the electronic circuit (136) is received within the outer housing (162) underneath the inner housing (160), wherein the light emitting element (128) is mounted to the electronic circuit (136) and wherein the light emitting element (128) protrudes from the electronic circuit (136) into the inner housing (160).

2. The spectroscopic light source (112) according to the preceding claim, wherein the light emitting element (128) comprises at least one incandescent lamp (130).

3. The spectroscopic light source (112) according to any one of the preceding claims, wherein the spectroscopic light source (112) is configured for turning on and off at least one of the output channels (156).

4. The spectroscopic light source (112) according to any one of the preceding claims, wherein the spectroscopic light source (112) is configured for modulating the light beam (116) in at least one of the output channels (156).

5. The spectroscopic light source (112) according to any one of the preceding claims, wherein the spectroscopic light source (112) is configured for independently modulating the light beams in each one of the output channels (156).

6. The spectroscopic light source (112) according to any one of the two preceding claims, wherein at least one optical element (170) is located inside the outer housing (162), wherein the optical element (170) comprises lenses (172) received in each of the openings (158) of the inner housing (160).

7. The spectroscopic light source (112) according to any one of the preceding claims, wherein the spectroscopic light source (112) further comprises at least one actuator (176), wherein the actuator (176) comprises at least one modulating element (164), wherein the modulating element (164) comprises at least one of a shutter and a chopper wheel (178).

8. The spectroscopic light source (112) according to any one of the preceding claims, wherein at least one of the output channels (156) comprises an optical fiber connector (184).

9. The spectroscopic light source (112) according to any one of the preceding claims, wherein the electronic circuit (136) comprises at least one interface (142).

10. The spectroscopic light source (112) according to any one of the preceding claims, wherein the electronic circuit (136) comprises at least one controller (146) configured for controlling at least one of the electric power applied to the light emitting element (128), at least one of the output channels (156).

11. The spectroscopic light source (112) according to the preceding claim, wherein the controller (146) is configured for performing a soft start and/or a soft stop of the light emitting element (128).

12. A spectroscopic measurement system (110) comprising
- at least one spectroscopic light source (112) according to any one of the preceding claims;
- at least one detector (114) configured for detecting at least one light beam (116) decoupled from the spectroscopic light source (112) and further configured for generating at least one corresponding detector signal;
- at least one readout electronics (118) configured for reading out the detector signal; and
- at least one evaluation device (120) configured for determining at least one item of information based on the detector signal.

13. A method of operating the spectroscopic measurement system (110) according to the preceding claim, the method comprising:
a) applying electric power to the light emitting element (128) of the spectroscopic light source (112) by using the electronic circuit (136);
b) emitting light by using the light emitting element (128);
c) decoupling at least one light beam (116) from the spectroscopic light source (112) by using at least one of the at least two output channels (156) while independently controlling each one of the output channels (156);
d) illuminating at least one measurement object (126) with the light beam (116);
e) detecting the light beam (116) by using the detector (114) of the spectroscopic measurement system (110) and generating at least one corresponding detector signal;
f) reading out the detector signal by using the readout electronics (118) of the spectroscopic measurement system (110); and
g) determining at least one item of information based on the detector signal by using the evaluation device (120) of the spectroscopic measurement system (110).

14. The method according to the preceding claim referring to a method, wherein, in step c), at least two light beams (116) are decoupled from the spectroscopic light source (112), wherein each light beam (116) is decoupled through a different output channel (156) of the spectroscopic light source (112), wherein in step d), the measurement object (126) is illuminated by at least one of the at least two light beams (116), wherein, in step c), the independently controlling of the output channels (156) comprises modulating at least one light beam (116) differently in the respective output channel (156) than the at least one remaining light beam (116) in the at least one remaining output channel (156).

## Patentansprüche

1. Spektroskopische Lichtquelle (112), umfassend
- mindestens ein Lichtemissionselement (128);
- mindestens eine elektronische Schaltung (136), die dazu ausgelegt ist, elektrische Leistung an das Lichtemissionselement (128) anzulegen; und
- mindestens ein Gehäuse (150), wobei das Gehäuse (150) zumindest teilweise das Lichtemissionselement (128) umgibt, wobei das Gehäuse (150) ein Innengehäuse (160) umfasst, das zumindest teilweise das Lichtemissionselement (128) umgibt; und
- mindestens zwei Ausgangskanäle (156), die durch das Gehäuse (150) laufen, wobei jeder der Ausgangskanäle (156) dazu ausgelegt ist, mindestens einen Lichtstrahl (116) von der spektroskopischen Lichtquelle (112) zu entkoppeln;
**dadurch gekennzeichnet, dass**
die spektroskopische Lichtquelle (112) dazu ausgelegt ist, jeden der Ausgangskanäle (156) unabhängig zu steuern, wobei das Gehäuse (150) ferner ein Außengehäuse (162) umfasst, wobei das Außengehäuse (162) zumindest teilweise das Innengehäuse (160) umgibt, wobei das Innengehäuse (160) und das Außengehäuse (162) jeweils mindestens zwei Öffnungen (158) als Teil der Ausgangskanäle (156) umfassen, wobei das Gehäuse (150) mindestens ein Basiselement (166) umfasst, wobei das Innengehäuse (160) und das Außengehäuse (162) direkt oder indirekt auf dem Basiselement (166) aufliegen, wobei die elektronische Schaltung (136) innerhalb des Außengehäuses (162) unter dem Innengehäuse (160) untergebracht ist, wobei das Lichtemissionselement (128) an der elektronischen Schaltung (136) befestigt ist, und wobei das Lichtemissionselement (128) von der elektronischen Schaltung (136) in das Innengehäuse (160) vorsteht.

2. Spektroskopische Lichtquelle (112) nach dem vorhergehenden Anspruch, wobei das Lichtemissionselement (128) mindestens eine Glühlampe (130) umfasst.

3. Spektroskopische Lichtquelle (112) nach einem der vorhergehenden Ansprüche, wobei die spektroskopische Lichtquelle (112) dazu ausgelegt ist, mindestens einen der Ausgangskanäle (156) ein- und auszuschalten.

4. Spektroskopische Lichtquelle (112) nach einem der vorhergehenden Ansprüche, wobei die spektroskopische Lichtquelle (112) dazu ausgelegt ist, den Lichtstrahl (116) in mindestens einem der Ausgangskanäle (156) zu modulieren.

5. Spektroskopische Lichtquelle (112) nach einem der vorhergehenden Ansprüche, wobei die spektroskopische Lichtquelle (112) dazu ausgelegt ist, die Lichtstrahlen in jedem der Ausgangskanäle (156) unabhängig zu modulieren.

6. Spektroskopische Lichtquelle (112) nach einem der beiden vorhergehenden Ansprüche, wobei sich mindestens ein optisches Element (170) innerhalb des Außengehäuses (162) befindet, wobei das optische Element (170) Linsen (172) umfasst, die in jeder der Öffnungen (158) des Innengehäuses (160) untergebracht sind.

7. Spektroskopische Lichtquelle (112) nach einem der vorhergehenden Ansprüche, wobei die spektroskopische Lichtquelle (112) ferner mindestens einen Aktuator (176) umfasst, wobei der Aktuator (176) mindestens ein Modulationselement (164) umfasst, wobei das Modulationselement (164) mindestens eines von einem Verschluss und einem Zerhackerrad (178) umfasst.

8. Spektroskopische Lichtquelle (112) nach einem der vorhergehenden Ansprüche, wobei mindestens einer der Ausgangskanäle (156) einen Glasfaserverbinder (184) umfasst.

9. Spektroskopische Lichtquelle (112) nach einem der vorhergehenden Ansprüche, wobei die elektronische Schaltung (136) mindestens eine Schnittstelle (142) umfasst.

10. Spektroskopische Lichtquelle (112) nach einem der vorhergehenden Ansprüche, wobei die elektronische Schaltung (136) mindestens eine Steuerung (146) umfasst, die dazu ausgelegt ist, mindestens eine der elektrischen Leistung, die an das Lichtemissionselement (128) angelegt wird, mindestens einen der Ausgangskanäle (156) zu steuern.

11. Spektroskopische Lichtquelle (112) nach dem vorhergehenden Anspruch, wobei die Steuerung (146) dazu ausgelegt ist, einen Soft-Start und/oder einen Soft-Stopp des Lichtemissionselements (128) durchzuführen.

12. Spektroskopisches Messsystem (110), umfassend
- mindestens eine spektroskopische Lichtquelle (112) nach einem der vorhergehenden Ansprüche;
- mindestens einen Detektor (114), der dazu ausgelegt ist, mindestens einen Lichtstrahl (116) zu detektieren, der von der spektroskopischen Lichtquelle (112) entkoppelt ist, und ferner dazu ausgelegt ist, mindestens ein entsprechendes Detektorsignal zu erzeugen;
- mindestens eine Ausleseelektronik (118), die dazu ausgelegt ist, das Detektorsignal auszulesen; und
- mindestens eine Bewertungsvorrichtung (120), die dazu ausgelegt ist, mindestens ein Informationselement basierend auf dem Detektorsignal zu bestimmen.

13. Verfahren zum Betreiben des spektroskopischen Messsystems (110) nach dem vorhergehenden Anspruch, wobei das Verfahren umfasst:
a) Anlegen elektrischer Leistung an das Lichtemissionselement (128) der spektroskopischen Lichtquelle (112) unter Verwendung der elektronischen Schaltung (136);
b) Emittieren von Licht unter Verwendung des Lichtemissionselements (128);
c) Entkoppeln mindestens eines Lichtstrahls (116) von der spektroskopischen Lichtquelle (112) unter Verwendung mindestens eines der mindestens zwei Ausgangskanäle (156), während jeder der Ausgangskanäle (156) unabhängig gesteuert wird;
d) Beleuchten mindestens eines Messobjekts (126) mit dem Lichtstrahl (116);
e) Detektieren des Lichtstrahls (116) unter Verwendung des Detektors (114) des spektroskopischen Messsystems (110) und Erzeugen mindestens eines entsprechenden Detektorsignals;
f) Auslesen des Detektorsignals unter Verwendung der Ausleseelektronik (118) des spektroskopischen Messsystems (110); und
g) Bestimmen mindestens eines Informationselements basierend auf dem Detektorsignal unter Verwendung der Bewertungsvorrichtung (120) des spektroskopischen Messsystems (110).

14. Verfahren nach dem vorhergehenden Anspruch, Bezug nehmend auf ein Verfahren, wobei in Schritt c) mindestens zwei Lichtstrahlen (116) von der spektroskopischen Lichtquelle (112) entkoppelt werden, wobei jeder Lichtstrahl (116) durch einen anderen Ausgangskanal (156) der spektroskopischen Lichtquelle (112) entkoppelt wird, wobei in Schritt d) das Messobjekt (126) durch mindestens einen der mindestens zwei Lichtstrahlen (116) beleuchtet wird, wobei in Schritt c) das unabhängige Steuern der Ausgangskanäle (156) das Modulieren mindestens eines Lichtstrahls (116) im jeweiligen Ausgangskanal (156) anders als der mindestens eine verbleibende Lichtstrahl (116) in dem mindestens einen verbleibenden Ausgangskanal (156) umfasst.

## Revendications

1. Source de lumière spectroscopique (112) comprenant
- au moins un élément électroluminescent (128) ;
- au moins un circuit électronique (136) configuré pour appliquer une puissance électrique à l'élément électroluminescent (128) ; et
- au moins un logement (150), le logement (150) entourant au moins partiellement l'élément électroluminescent (128), le logement (150) comprenant un logement interne (160) entourant au moins partiellement l'élément électroluminescent (128) ; et
- au moins deux canaux de sortie (156) traversant le logement (150), chacun des canaux de sortie (156) étant configuré pour découpler au moins un faisceau lumineux (116) de la source de lumière spectroscopique (112) ;
**caractérisé en ce que**
la source de lumière spectroscopique (112) est configurée pour commander de manière indépendante chacun des canaux de sortie (156), le logement (150) comprenant en outre un logement externe (162), le logement externe (162) entourant au moins partiellement le logement interne (160), le logement interne (160) et le logement externe (162) comprenant chacun au moins deux ouvertures (158) faisant partie des canaux de sortie (156), le logement (150) comprenant au moins un élément de base (166), le logement interne (160) et le logement externe (162) reposant directement ou indirectement sur l'élément de base (166), le circuit électronique (136) étant reçu dans le logement externe (162) en dessous du logement interne (160), l'élément électroluminescent (128) étant monté sur le circuit électronique (136) et l'élément électroluminescent (128) faisant saillie du circuit électronique (136) vers l'intérieur du logement interne (160).

2. Source de lumière spectroscopique (112) selon la revendication précédente, dans laquelle l'élément électroluminescent (128) comprend au moins une lampe à incandescence (130).

3. Source de lumière spectroscopique (112) selon l'une quelconque des revendications précédentes, dans laquelle la source de lumière spectroscopique (112) est configurée pour allumer et éteindre au moins l'un des canaux de sortie (156).

4. Source de lumière spectroscopique (112) selon l'une quelconque des revendications précédentes, dans laquelle la source de lumière spectroscopique (112) est configurée pour moduler le faisceau lumineux (116) dans au moins l'un des canaux de sortie (156).

5. Source de lumière spectroscopique (112) selon l'une quelconque des revendications précédentes, dans laquelle la source de lumière spectroscopique (112) est configurée pour moduler indépendamment les faisceaux lumineux dans chacun des canaux de sortie (156).

6. Source de lumière spectroscopique (112) selon l'une quelconque des deux revendications précédentes, dans laquelle au moins un élément optique (170) est situé à l'intérieur du logement externe (162), l'élément optique (170) comprenant des lentilles (172) reçues dans chacune des ouvertures (158) du logement interne (160).

7. Source de lumière spectroscopique (112) selon l'une quelconque des revendications précédentes, dans laquelle la source de lumière spectroscopique (112) comprend en outre au moins un actionneur (176), l'actionneur (176) comprenant au moins un élément de modulation (164), l'élément de modulation (164) comprenant au moins l'un d'un obturateur et d'une roue hacheuse (178).

8. Source de lumière spectroscopique (112) selon l'une quelconque des revendications précédentes, dans laquelle au moins l'un des canaux de sortie (156) comprend un connecteur de fibre optique (184).

9. Source de lumière spectroscopique (112) selon l'une quelconque des revendications précédentes, dans laquelle le circuit électronique (136) comprend au moins une interface (142).

10. Source de lumière spectroscopique (112) selon l'une quelconque des revendications précédentes, dans laquelle le circuit électronique (136) comprend au moins un contrôleur (146) configuré pour commander au moins l'une des puissances électriques appliquées à l'élément émetteur de lumière (128), au moins l'un des canaux de sortie (156).

11. Source de lumière spectroscopique (112) selon la revendication précédente, dans laquelle le contrôleur (146) est configuré pour exécuter un démarrage en douceur et/ou un arrêt en douceur de l'élément électroluminescent (128).

12. Système de mesure spectroscopique (110) comprenant
- au moins une source de lumière spectroscopique (112) selon l'une quelconque des revendications précédentes ;
- au moins un détecteur (114) configuré pour détecter au moins un faisceau lumineux (116) découplé de la source de lumière spectroscopique (112) et configuré en outre pour générer au moins un signal de détecteur correspondant ;
- au moins une électronique de lecture (118) configurée pour lire le signal de détecteur ; et
- au moins un dispositif d'évaluation (120) configuré pour déterminer au moins un élément d'information sur la base du signal de détecteur.

13. Procédé de commande du système de mesure spectroscopique (110) selon la revendication précédente, le procédé comprenant :
a) l'application d'une puissance électrique à l'élément électroluminescent (128) de la source de lumière spectroscopique (112) en utilisant le circuit électronique (136) ;
b) l'émission de lumière au moyen de l'élément électroluminescent (128) ;
c) le découplage d'au moins un faisceau lumineux (116) de la source de lumière spectroscopique (112) en utilisant au moins l'un des au moins deux canaux de sortie (156) tout en commandant de manière indépendante chacun des canaux de sortie (156) ;
d) l'éclairage d'au moins un objet à mesurer (126) par le faisceau lumineux (116) ;
e) la détection du faisceau lumineux (116) au moyen du détecteur (114) du système de mesure spectroscopique (110) et la génération d'au moins un signal de détecteur correspondant ;
f) la lecture du signal de détecteur en utilisant l'électronique de lecture (118) du système de mesure de spectroscopie (110) ; et
g) la détermination d'au moins un élément d'information sur la base du signal de détecteur en utilisant le dispositif d'évaluation (120) du système de mesure spectroscopique (110).

14. Procédé selon la revendication précédente se référant à un procédé dans lequel, à l'étape c), au moins deux faisceaux lumineux (116) sont découplés de la source de lumière spectroscopique (112), chaque faisceau lumineux (116) étant découplé à travers un canal de sortie différent (156) de la source de lumière spectroscopique (112), dans lequel, à l'étape d), l'objet à mesurer (126) est éclairé par au moins l'un des au moins deux faisceaux lumineux (116), dans lequel, à l'étape c), la commande indépendante des canaux de sortie (156) comprend la modulation différente d'au moins un faisceau lumineux (116) dans le canal de sortie respectif (156) par rapport à l'au moins un faisceau lumineux restant (116) dans l'au moins un canal de sortie restant (156) .
